## Europäisches Patentamt
## European Patent Office
## Office européen des brevets

(19)

(11) Publication number: **0 093 200**
**B1**

(12)

# EUROPEAN PATENT SPECIFICATION

(45) Date of publication of patent specification: **15.03.89**

(51) Int. Cl.⁴: **G 11 B 5/09**, G 11 B 5/58, G 11 B 5/03

(21) Application number: **82111445.1**

(22) Date of filing: **10.12.82**

(54) A method for recording data on a magnetic recording medium.

(30) Priority: **29.04.82 US 373203**

(43) Date of publication of application:
**09.11.83 Bulletin 83/45**

(45) Publication of the grant of the patent:
**15.03.89 Bulletin 89/11**

(84) Designated Contracting States:
**DE FR GB**

(56) References cited:
**EP-A-0 030 256**
**EP-A-0 064 099**
**US-A-1 886 616**
**US-A-3 187 111**
**US-A-3 956 769**

**IEEE TRANSACTIONS ON MAGNETICS, vol.
MAG-8, no. 3, September 1972, pages 539-541,
New York, US; L.W. BROWNLOW et al.: "Write
field analysis for integrated heads of the finite
pole-tip configuration"**

(73) Proprietor: **International Business Machines
Corporation
Old Orchard Road
Armonk, N.Y. 10504 (US)**

(72) Inventor: **Klaassen, Klaas B.
20 Spinel
NL-2691 TM 's-Gravenzande (NL)**

(74) Representative: **Hobbs, Francis John
IBM United Kingdom Limited Intellectual
Property Department Hursley Park ·
Winchester Hampshire SO21 2JN (GB)**

(56) References cited:
**IBM TECHNICAL DISCLOSURE BULLETIN, vol.
24, no. 4, September 1981, pages 1910-1911,
New York, US; M.A. CHURCH et al.: "Thin film
head assembly with side-by-side elements"**

**IBM TECHNICAL DISCLOSURE BULLETIN, vol.
23, no. 9, February 1981, pages 4314-4316, New
York, US; K.B. KLAASSEN: "AC bias read-
while-write driver"**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

This invention relates to a method for recording high frequency signals representing data while reading out relatively low frequency information through a common magnetic head or closely spaced heads and a common recording channel.

Generally, prior art magnetic recording systems employ AC bias or saturated recording techniques. AC bias recording is used to improve the linearity of the recording channel, but reduces the high frequency response of the recording channel. Saturation recording can only record two magnetization levels and produces higher noise. In both methods, data signals are written in the baseband, i.e., the write signal contains a very high signal energy in the baseband. The baseband of a recording channel is defined as the range of frequencies or frequency band in which a sinusoidal write current will produce a non-zero readback signal when using DC or AC bias, or saturating or non-saturating recording.

In those prior art systems where stored information is being read out while new data is being written, such as in disk drives that have prerecorded servo signals in a buried layer of the magnetic disk that are being read out while write data signals are being registered on a separate layer of the disk, the frequencies of both the read servo signal and the newly recorded data signal are within the baseband frequency range. It is necessary, therefore, to separate the two signals by the use of critical filters on the write side and/or on the read side of the recording channel. Filtering causes an undesirable attenuation and phase distortion of the signals and other deleterious effects, besides adding to the cost, mass and volume of the processing system. Also, when AC bias is used for writing data, the phases of the respective bias and data signals result in a varying peak shift depending on the actual phase between the data pulses and bias signal zero crossings.

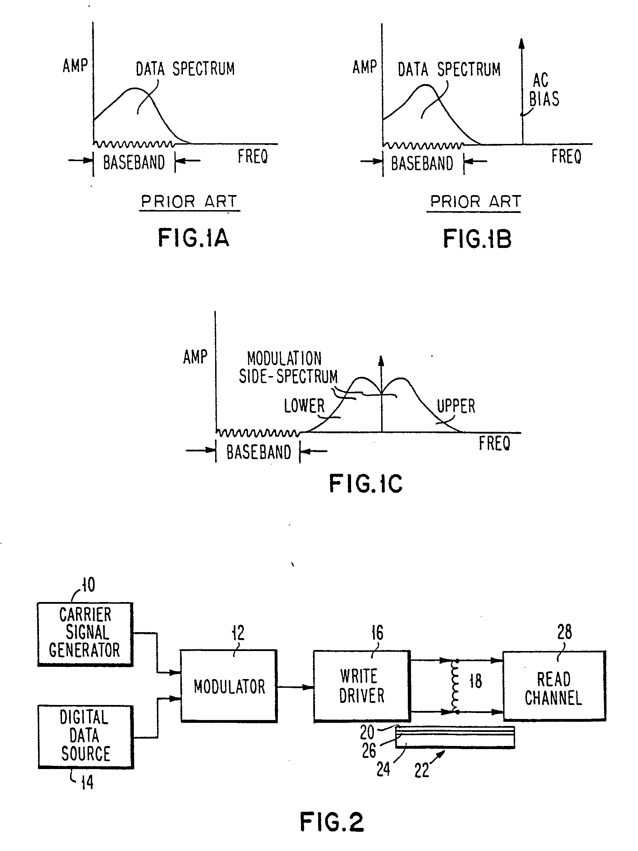

In prior art systems, the frequency of the write data signal is always in the baseband, as exemplified by FIG. 1A, representing a saturated recording method. An auxiliary input signal having a frequency above the baseband, such as an AC bias signal, may be used but not recorded in order to linearize the channel. The bias signal is a high frequency sinewave that is added to the baseband signal. This high frequency write signal cannot be stored in the magnetic medium because the thin magnetic recording media on the disk cannot sustain the short wavelength associated with this frequency; it is outside the baseband, as illustrated in FIG. 1B.

It would be desirable for instance for a head positioning servo system in a disk file to provide a magnetic recording system which operates without AC bias or saturated recording, and which obviates the need for complex and costly filters to separate the data signal from low frequency servo information.

US-A-4,313,140 discloses a data recording system having a buried servo track wherein a single transducing gap of a magnetic head processes write data and recorded servo information. Signal separation is achieved with high pass filters.

US-A-3,187,111 discloses a method for magnetically recording a data signal on a magnetic medium with a magnetic head, the method comprising the steps of generating a periodic carrier signal having a repetition frequency greater than the highest frequency of the data baseband, modulating said carrier signal with said data signal, processing said data modulated carrier in a recording channel in a nonlinear mode so that the processed resultant signal has components in the data baseband whereby said resultant signal components are recorded on the magnetic medium and simultaneously reading out said resultant signal components recorded on said magnetic medium. Non-linearity is produced in the recording channel by magnetically saturating the magnetic medium before the modulated carrier signal is applied to the recording channel.

According to the invention there is provided a method for magnetically recording a data signal on a magnetic medium with a magnetic head, the method comprising the steps of generating a periodic carrier signal having a repetition frequency greater than the highest frequency of the data baseband, modulating said carrier signal with said data signal, and processing said data modulated carrier in a recording channel in a nonlinear mode so that the processed resultant signal has components in the data baseband whereby said resultant signal components are recorded on the magnetic medium, the method being characterised by the magnetic medium being magnetically unsaturated, by the magnetic medium having a low frequency information signal prerecorded thereon, by the magnetic head being such as to produce non-linearity in the recording channel, and by simultaneously reading out the prerecorded low frequency information signal and recording said data signal.

The invention will now be described by way of example with reference to the accompanying drawings in which:

FIGS. 1A and 1B are plots of amplitude vs. frequency representing the write signal spectra for saturated recording and AC bias recording respectively, as practiced in the prior art;

FIG. 1C is a plot of amplitude vs. frequency illustrating the frequency spectrum when a carrier is modulated with data, in accordance with this invention;

FIG. 2 is a block diagram of a system used to implement the inventive method of this application;

FIG. 3 is a schematic circuit diagram of a balanced modulator, such as may be used with the present invention;

FIG. 4 is a schematic circuit diagram of a ring modulator, which may be used as an alternative to the balanced modulator of FIG. 3;

FIG. 5 is a block diagram of a write signal generator circuit employed to implement the novel magnetic recording method of this invention;

FIG. 6 is a waveform representing the write current, in expanded form, generated by modulation of a single sinewave carrier by a data signal transition in accordance with this invention;

FIG. 7 is a waveform of a phase modulated carrier write current with two adjacent data signal transitions;

FIG. 8 is a waveform of a readback signal obtained from the write current, depicted in FIG. 6;

FIG. 9 is a block diagram of a read circuit for separating data and servo signals in the readout mode;

FIG. 10A is a typical magnetization curve wherein the magnetization M in the recording layer of the disk is plotted versus the write current $I_w$ through the coil of the recording head; and

FIG. 10B indicates the resulting typical remanent magnetization $M_r$ of the magnetic recording layer versus the write current $I_w$. Here XY indicates the preferred zone of operation for the envelope amplitude of the modulated signal $I_w$, in accordance with this invention.

FIG. 1A, illustrates the data frequency spectrum of a write current signal processed by saturation recording, as practiced in the prior art. The write signal energy is concentrated within a low frequency spectrum or baseband B that is recordable on a magnetic medium, such as a magnetic disk. However, in systems such as magnetic disk files wherein servo signals are used for positioning of the magnetic head relative to recorded tracks, the frequency of the servo signals and the frequency of the data are both within the same data baseband spectrum so that it is necessary to employ critical filters for separating the signals during the write mode.

Another form of magnetic recording employs AC bias, as depicted in FIG. 1B. The frequencies of the write data signal are well below the frequency of the AC bias signal, and the data signal spectrum is within the baseband B. Again critical filters are required for processing data and servo signals concurrently in the recording channel.

In accordance with this invention, and as illustrated in FIG. 1C, a carrier signal of fixed repetition frequency is modulated by a data signal to generate upper and/or lower sidebands. The carrier signal is a repetitive waveform whose fundamental frequency is a relatively high frequency and therefore the carrier is not recordable on a magnetic medium. For example, a carrier frequency of 100 MHz is used, and the carrier signal is modulated by a write data signal having a frequency in the range of 0.5 MHz to 6 MHz. The frequency of the servo signal is about 100 KHz, by way of example. This modulated signal forms the write current which flows through the coil of the recording head.

The demodulation of the modulated signal is accomplished in the nonlinear recording channel, which includes the magnetic head and the magnetic recording disk. Nonlinearity in the magnetic head is caused by partial saturation of its magnetic circuit that incorporates the permalloy pole pieces of a thin film head, for example. Consequently, the magnetic field at the write gap of the head is not precisely proportional to the write current. Moreover, the magnetic circuit of the head can be designed so as to give a specific nonlinearity desirable for the demodulation.

Another source of nonlinearity in the recording channel is in the magnetization of the magnetic medium. Due to the hysteresis loops of the magnetic particles, the magnetic interaction of the adjacent particles and statistical variations in particle size, orientation and distribution, the remanent magnetization $M_r$ in the medium after writing with an external magnetic field produced by a current $I_w$ through a recording head is not proportional to that field. This is illustrated in FIGS. 10A and 10B.

Nonlinearity of the recording process results in a spectral conversion of the modulated out-of-band write current signal to a demodulated baseband remanent magnetization signal that is stored in the magnetic medium. The write current has a magnitude such that operation along the $M_r$-$I_w$ curve is below the saturation level in region X-Y shown in FIG. 10B, with the average envelope amplitude of the write signal corresponding with the steepest portion of the channel characteristic.

With reference to FIG. 2 depicting a preferred implementation of the invention, a sinewave carrier signal of fixed frequency produced by generator 10 is phase modulated in a modulator 12 by digital data signals derived from a data source 14. The data modulated carrier signal is then applied to a write driver 16 which generates a write current representing data signals. As the write current passes through the nonlinear channel that includes the write driver 16 and a magnetic head 18, preferably a thin film head, and a recording layer 20 of a magnetic disk 22, the data represented by the write current is converted to baseband remanent magnetization that is stored in the recording layer. The magnetic disk 22 includes a nonmagnetic substrate 24 and a buried servo layer 26 deposited on the substrate below the magnetic recording layer 20. A disk of this type is disclosed in U.S. Patent 3,404,392.

Concurrent with the recordation of the data magnetization signal, the magnetic head 18 senses the prerecorded servo information in the buried layer 26 with the same transducing gap used for recording data or with a different transducing gap located in close proximity to the data recording gap. The low frequency servo information is passed to a read channel 28 for detection and further utilization, such as positioning the accessing head to a selected data track and following the circular track during the write mode.

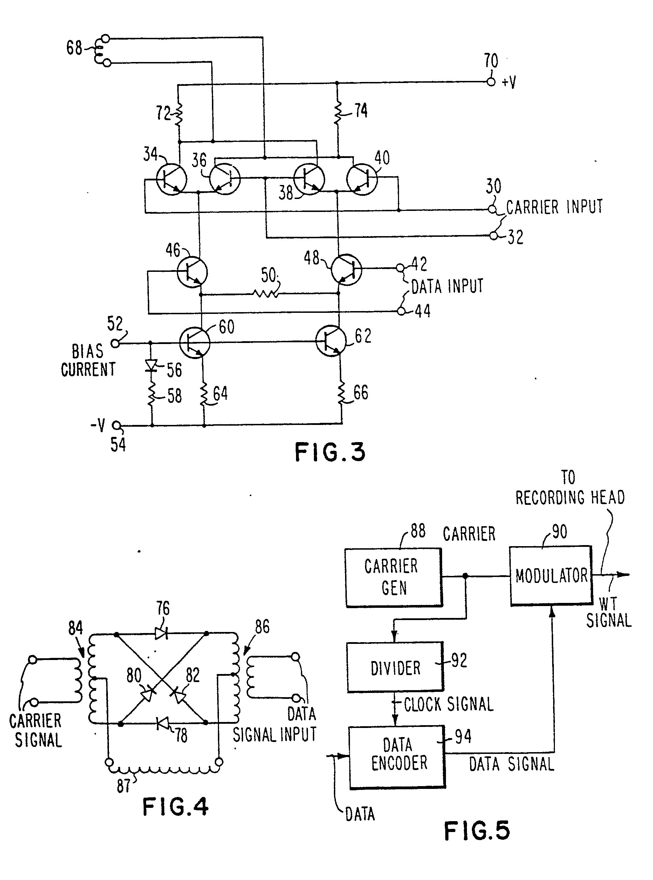

With reference to FIG. 3, a balanced modulator circuit, such as may be used for the modulator 12 of FIG. 2, is illustrated. In operation, a carrier signal is applied across terminals 30, 32 that are connected respectively to the base electrodes of NPN complementary transistors 34, 36 and transistors 38, 40. Simultaneously, the data input signal is fed to terminals 42, 44 for application to the base electrodes of transistors 46, 48. The emitters of the transistors 46 and 48 are connected by a resistor 50. The common emitter circuit of transistors 46, 48 is coupled to a bias circuit 52 that is connected to a source of supply current 54 via diode 56 and resistor 58. The bias current is applied to the transistors 46 and 48 and the data channel through the current source transistors 60 and 62, which are also coupled to the supply voltage 54 by resistors 64 and 66 respectively.

The data and carrier signals are mixed in the circuit comprising transistors 34, 36, 38 and 40, and the data modulated carrier is directed from the output collector electrodes to a magnetic head 68 either directly or through a write driver 16 (see FIG. 2). The collector electrodes of output transistors 34, 36, 38 and 40 are tied to a positive potential 70 through resistors 72, 74. The data modulated signal to the magnetic head 68 provides a baseband remanent magnetization that is recorded as data on the top recording layer 20 of the magnetic disk 22.

As an alternative to the balanced modulator, a ring modulator as illustrated in FIG. 4 may be used. The ring modulator has four diode gates 76, 78, 80 and 82 connected across inductive elements of transformers 84 and 86. The carrier and data signals are supplied to the primary coils of the transformers 84 and 86 respectively, and the signals are mixed and suppressed by the diode array. The resultant modulated signal is applied to the magnetic head circuit 87 for recording, either directly or via a write driver.

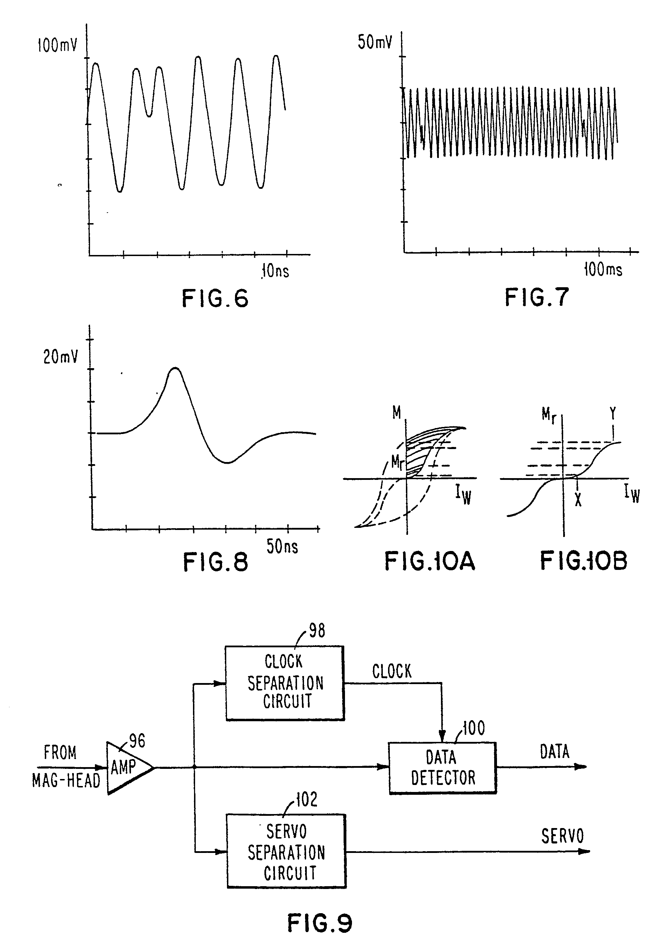

In order to provide proper synchronization between the carrier and data signals, a high frequency write signal generation circuit, such as depicted in FIG. 5, is employed. A carrier signal generator 88 provides the carrier signal to a modulator 90. The carrier signal also is applied to a divider circuit 92 which produces a clock signal having a predetermined fixed phase difference with respect to the carrier, for instance, the same phase as the carrier. The clock signal is used for timing out the data signal which is applied from a data encoder 94 in conjunction with a carrier signal to the modulator for mixing the signals. The write signal output is then applied to a magnetic recording head, as described above.

To obtain the data readback signal, the recorded data is sensed by the magnetic head and passed to an amplifier 96, as illustrated in the readback system of FIG. 9. The amplified readback signal is applied to a separation circuit 98 that separates the clock signal from the composite data and servo signal. Valid data synchronized by the clock is detected in the data detector 100. Simultaneously the low frequency servo signal that is sensed by the head is separated in the servo circuit 102, and the servo output is applied to a servo system that controls the position of the accessing magnetic head. In the write mode a noncritical low-pass filter located in front of amplifier 96 separates the low frequency servo signal from the high frequency write signal.

There has been described herein a novel method for recording high frequency signals representing data with simultaneous readout of low frequency information that includes the steps of modulating a carrier signal of very high frequency with a data signal, and processing the mixed signal through a nonlinear recording channel. The modulation may be achieved by phase modulation or amplitude modulation, by way of example. In this way, the low frequency information signal and data signal do not experience interference, thus precluding the need for critical high pass filters among other things.

## Claims

1. A method for magnetically recording a data signal (14) on a magnetic medium (22) with a magnetic head (18), the method comprising the steps of generating a periodic carrier signal (10) having a repetition frequency greater than the highest frequency of the data baseband, modulating (12) said carrier signal with said data signal, and processing said data modulated carrier in a recording channel (16) in a nonlinear mode so that the processed resultant signal has components in the data baseband whereby said resultant signal components are recorded on the magnetic medium (22), the method being characterised by the magnetic medium being magnetically unsaturated, by the magnetic medium having a low frequency information signal prerecorded thereon, by the magnetic head being such as to produce non-linearity in the recording channel, and by simultaneously reading out (28) the prerecorded low frequency information signal and recording said data signal.

2. A method as claimed in claim 1, wherein said low frequency information is a servo signal useful for positioning said magnetic head relative to said magnetic medium.

3. A method as claimed in claim 2, wherein said carrier signal is generated as a fixed frequency of approximately 100 MHz, said write data signal has a frequency range of approximately 0.5 - 6 MHz, and said servo signal has a frequency of approximately 100 KHz.

4. A method as claimed in claim 2 or 3, wherein said data signal is stored in a first recording layer of said magnetic medium, and said servo signal is stored in a second recording layer of said magnetic medium.

5. A method as claimed in claim 4, wherein said first and second recording layers operate with different coercivities.

6. A method as claimed in any one of the preceding claims, wherein said recording of said data resultant signal components and said readout of said low frequency information are achieved with a single transducing gap of said magnetic head or with two adjacent transducing gaps, one for recording data and one for reading low frequency information.

7. A method as claimed in any one of the preceding claims, wherein said magnetic head is a thin film head that provides nonlinear recording operation.

8. A method as claimed in any one of the preceding claims, wherein said data signal modulates said carrier signal by phase modulation.

9. A method as claimed in any one of claims 1 to 7, wherein said data signal modulates said carrier signal by amplitude modulation.

## Patentansprüche

1. Verfahren zur magnetischen Aufzeichnung eines Datensignals (14) auf einem magnetischem Medium (22) mit einem Magnetkopf (18), wobei das Verfahren die Verfahrensschritte des Erzeugens eines periodischen Trägersignals (10) mit einer Wiederholfrequenz, die größer als die höchste Frequenz des Daten-Basisbandes ist, des Modulierens (12) des Trägersignals mit dem Datensignal, und des Verarbeitens des datenmodulierten Trägers in einem Aufzeichnungskanal (16) in einer nicht-linearen Weise, so daß das verarbeitete resultierende Signal Komponenten im Daten-Basisband hat, wodurch die resultierenden Signalkomponenten auf dem magnetischen Medium (22) aufgezeichnet werden, wobei das Verfahren dadurch gekennzeichnet ist, daß das magnetische Medium magnetisch ungesättigt ist, daß das magnetische Medium ein darauf voraufgezeichnetes niederfrequentes Informationssignal aufweist, daß der Magnetkopf derart ist, daß er Nicht-Linearität im Aufzeichnungskanal erzeugt, und daß gleichzeitig das voraufgezeichnete niederfrequente Informationssignal ausgelesen (28) und das Datensignal aufgezeichnet werden.

2. Verfahren nach Anspruch 1, bei welchem die niederfrequente Information ein Servosignal ist, das zur Positionierung des Magnetkopfes relativ zum Aufzeichnungsmedium brauchbar ist.

3. Verfahren nach Anspruch 2, bei welchem das Trägersignal als feste Frequenz von ungefähr 100 MHz erzeugt wird, das Schreibdatensignal einen Frequenzbereich von ungefähr 0,5 - 6 MHz hat und das Servosignal eine Frequenz von ungefähr 100 kHz hat.

4. Verfahren nach Anspruch 2 oder 3, bei welchem das Datensignal in einer ersten Aufzeichnungsschicht des magnetischen Mediums und das Servosignal in einer zweiten Aufzeichnungsschicht des magnetischen Mediums gespeichert wird.

5. Verfahren nach Anspruch 4, bei welchem die erste und zweite Aufzeichnungsschicht mit verschiedenen Koerzitivfeldstärken arbeiten.

6. Verfahren nach irgendeinem der vorstehenden Ansprüche, bei welchem das Aufzeichnen der resultierenden Datensignalkomponenten und das Auslesen der niederfrequenten Information mit einem einzigen Wandlerspalt des Magnetkopfes oder mit zwei benachbarten Wandlerspalten, einem zum Aufzeichnen von Daten und einem zum Lesen niederfrequenter Information, erzielt werden.

7. Verfahren nach irgendeinem der vorstehenden Ansprüche, bei welchem der Magnetkopf ein Dünnschichtkopf ist, der einen nicht-linearen Aufzeichnungsvorgang liefert.

8. Verfahren nach irgendeinem der vorstehenden Ansprüche, bei welchem das Datensignal das Trägersignal durch Phasenmodulation moduliert.

9. Verfahren nach irgendeinem der Ansprüche 1 bis 7, bei welchem das Datensignal das Trägersignal durch Amplitudenmodulation moduliert.

## Revendications

1. Procédé pour réaliser l'enregistrement magnétique d'un signal de données (14) sur un support magnétique (22) à l'aide d'une tête magnétique (18), le procédé incluant les étapes consistant à produire un signal de porteuse périodique (10) possédant une fréquence de récurrence supérieure à la fréquence maximale de la bande de base des données, moduler (12) ledit signal de porteuse à l'aide dudit signal de données, et traiter ladite porteuse modulée par les données dans un canal d'enregistrement (16) selon un mode non linéaire de sorte que le signal résultant traité possède des composantes situées dans la bande de base des données, ce qui a pour effet que lesdites composantes du signal résultant sont enregistrées sur le support magnétique (22), le procédé étant caractérisé en ce que le support magnétique est non saturé magnétiquement, qu'un signal d'information à basse fréquence est préenregistré sur le support magnétique, que la tête magnétique est à même de produire une non-linéarité dans le canal d'enregistrement, et que la lecture (28) du signal d'information à basse fréquence préenregistré et l'enregistrement dudit signal de données sont exécutés simultanément.

2. Procédé selon la revendication 1, selon lequel ladite information à basse fréquence est un signal d'asservissement utile pour positionner ladite tête magnétique par rapport audit support magnétique.

3. Procédé suivant la revendication 2, selon lequel ledit signal de porteuse est produit sous la forme d'une fréquence fixe d'environ 100 MHz, ledit signal de données d'enregistrement possède une gamme de fréquences correspondant approximativement à 0,5-6 MHz, et ledit signal d'asservissement possède une fréquence d'environ 100 kHz.

4. Procédé suivant la revendication 2 ou 3, selon lequel ledit signal de données est mémorisé dans une première couche d'enregistrement dudit support magnétique, et ledit signal d'asservissement est mémorisé dans une seconde couche d'enregistrement dudit support magnétique.

5. Procédé suivant la revendication 4, selon lequel lesdites première et seconde couches d'enregistrement fonctionnent avec des forces coercitives différentes.

6. Procédé selon l'une quelconque des revendications précédentes, selon lequel ledit enregistrement desdites composantes du signal résultant de données et ladite lecture de ladite information à basse fréquence sont réalisés avec un seul entrefer de transmission de ladite tête magnétique ou avec deux entrefers de transmission voisins, l'un étant prévu pour l'enregistrement des données et l'autre pour la lecture de l'information à basse fréquence.

7. Procèdé selon l'une quelconque des revendications précédentes, selon lequel ladite tête magnétique est une tête à couches minces qui réalise une opération d'enregistrement non linéaire.

8. Procédé selon l'une quelconque des revendications précédentes, selon lequel ledit signal de données module ledit signal de porteuse selon une modulation de phase.

9. Procédé selon l'une quelconque des revendications 1 à 7, selon lequel ledit signal de données module ledit signal de porteuse au moyen d'une modulation d'amplitude.

PRIOR ART
FIG.1A

PRIOR ART
FIG.1B

FIG.1C

FIG.2

1

EP 0 093 200 B1

FIG.3

FIG.4

FIG.5

CARRIER INPUT
DATA INPUT
BIAS CURRENT
CARRIER SIGNAL
DATA SIGNAL INPUT
TO RECORDING HEAD
CARRIER GEN
MODULATOR
DIVIDER
CLOCK SIGNAL
DATA ENCODER
DATA SIGNAL
WT SIGNAL
DATA

2

FIG.6

FIG.7

FIG.8

FIG.10A

FIG.10B

FIG.9